**Europäisches Patentamt**

**European Patent Office**

**Office européen des brevets**

(19)

(11) Veröffentlichungsnummer: **0 162 965**
**B1**

(12) **EUROPÄISCHE PATENTSCHRIFT**

(45) Veröffentlichungstag der Patentschrift:
**19.11.87**

(51) Int. Cl.⁴: **H 02 H 9/00**

(21) Anmeldenummer: **84115952.8**

(22) Anmeldetag: **20.12.84**

(54) **Schaltungsanordnung zur Bedämpfung von Ein- und Ausschaltschwingungen, in einer Schaltanlage.**

(30) Priorität: **19.04.84 DE 3414953**

(43) Veröffentlichungstag der Anmeldung:
**04.12.85 Patentblatt 85/49**

(45) Bekanntmachung des Hinweises auf die Patenterteilung:
**19.11.87 Patentblatt 87/47**

(84) Benannte Vertragsstaaten:
**AT CH DE GB LI NL SE**

(56) Entgegenhaltungen:
**CH - A - 117 433**
**DE - A - 2 842 341**
**DE - C - 466 373**

(73) Patentinhaber: **Siemens Aktiengesellschaft Berlin und München, Wittelsbacherplatz 2, D-8000 München 2 (DE)**

(72) Erfinder: **Müller, Walter, Dr. Dipl.-Ing., Kappelbergsteig 37, D-8540 Schwabach (DE)**

**Beschreibung**

Die Erfindung betrifft eine Schaltungsanordnung zur Bedämpfung von Ein- und Ausschaltschwingungen in einer Schaltanlage eines Elektrizitätsversorgungsnetzes mit Transformatoren, Stromwandlern und Schaltern an und in Leitungsabzweigen.

Werden Transformatorabzweige über längere Leitungsabschnitte von einer Zentralschaltanlage gespeist, dann treten unter ungünstigen Umständen Ladeschwingungen der Leitung mit deren Eigenfrequenz im Bereich von etwa 10 bis 500 kHz auf, die möglicherweise zu einer Resonanzanregung der Transformatorwicklungen führen.

Derartige Ladeschwingungen entstehen beim Zuschalten einer Leitung, wenn bereits mindestens eine weitere Leitung schon unter Spannung steht. Ist am Ende eines Abzweigs ein Transformator angeschlossen und führen die Ladeschwingungen zu einer Resonanzanregung der Wicklungen, so wird die Höhe der in den Wicklungen angefachten Überspannungen nur durch die Dämpfungskonstanten des Netzes und des Transformators bestimmt, wenn keine besonderen Vorkehrungen hiergegen vorgesehen sind.

Der bekannte, normale Überspannungsschutz durch Überspannungsableiter ist in diesen Fällen unwirksam, weil die Amplituden im Kabelnetz und an den Transformatorklemmen die Amplituden der höchsten zulässigen Betriebsspannung nicht oder nur geringfügig überschreiten, so dass die Überspannungsableiter nicht ansprechen. Trotzdem kann es dabei innerhalb der Wicklungen bei Resonanzanregung je nach Dämpfung zu Überspannungsfaktoren von etwa 10 bis 40 kommen.

Als Abhilfe ist bereits vorgeschlagen, zur zusätzlichen Dämpfung Schalter mit Vorkontakten und Widerständen zu verwenden. Diese Lösung ist jedoch wegen des apparativen Aufwandes bei Mittelspannungsschaltern unwirtschaftlich. Es ist auch schon bekannt, zur zusätzlichen Dämpfung am Schalter oder vorzugsweise am Transformator RC-Glieder zwischen Phase und Erde vorzusehen. Dies erfordert jedoch beispielsweise, dass auf die platzsparende, direkte Einführung des Kabels in den Transformator über Kabelendverschlüsse verzichtet werden muss.

Durch die DE-A-2 842 341 ist darüber hinaus zum schaltanlagenseitigen Einbau in Hochspannungskabelnetzen ein Dämpfungsglied bekannt, das aus einer räumlich konzentrischen Anordnung von einem spannungsabhängigen Widerstand, einem Festwiderstand und einer Drosselwicklung besteht. In dieser Anordnung sind die drei genannten Widerstände elektrisch parallel geschaltet. Diese Anordnung ist jedoch verhältnismässig aufwendig und zwar vor allem in den Fällen, in denen sie speziell an die Verhältnisse in den einzelnen Abzweigen angepasst sein muss.

Der Erfindung liegt daher die Aufgabe zugrunde, zur Bedämpfung von Ein- und Ausschaltschwingungen in einer Schaltanlage eine Schaltungsanordnung zu schaffen, die einfach und wirtschaftlich an Besonderheiten des jeweiligen Einsatzfalles anpassbar ist und durch die die Art der jeweils erforderlichen Anpassung vorgegeben ist.

Diese Aufgabe wird erfindungsgemäss für eine Schaltungsanordnung der eingangs genannten Art dadurch gelöst, dass parallel zu jedem der in einem Transformatorabzweig liegenden, gegen hochfrequente Schwingungen als Längsinduktivität $L_S$ wirkenden Stromwandler der Schaltanlage ein Parallelwiderstand R der Grösse

$$R = 2 \pi f_E L_S$$

geschaltet ist, wobei $f_E$ die Eigenfrequenz der Schaltanlage ist.

Nach zweckmässigen Weiterbildungen der Erfindung ist hinsichtlich der Eigenfrequenz $f_E$ zur Bestimmung der Grösse des Parallelwiderstandes R lediglich der dominierende Einfluss der Eigenfrequenz des jeweils angeschlossenen Transformators berücksichtigt und ist nicht nur den Stromwandlern in Abzweigen zu Transformatoren, sondern auch in anderen Abzweigen, soweit sie Anteile eines Hochfrequenzstromes führen, liegenden Stromwandlern ein Parallelwiderstand parallel geschaltet.

Der besondere Vorteil der erfindungsgemässen Lösung besteht darin, dass je Abzweig nur ein einziges zusätzliches Bauelement, und zwar je Stromwandler je ein Parallelwiderstand erforderlich ist, um eine optimale Bedämpfung der Eigenfrequenz der Anlage zu erreichen.

Ein Ausführungsbeispiel der Erfindung wird anhand einer Zeichnung näher erläutert.

Ein Netzleiter 1 eines elektrischen Versorgungsnetzes ist über eine Brücke 7 mit einer Leiterschiene 2 in einer Schaltanlage verbunden. Die Leiterschiene 2 ihrerseits speist Abzweige 3, 4, 5 und 6.

Die Abzweige 3, 5 und 6 führen über je einen eigenen Schalter S und einen Stromwandler $L_S$ zu je einem Transformator Tr. Der Abzweig 4 enthält lediglich einen Schalter S sowie einen Stromwandler $L_S$. Die Abzweige 3, 4, 5 und 6 sind bis zu einigen Kilometern lang, so dass beim Ein- oder Ausschalten Lade- bzw. Wiederzündschwingungen im Frequenzbereich von 10 bis 500 kHz auftreten. Dies ist insbesondere dann der Fall, wenn bereits mindestens einer der Schalter S geschlossen ist.

Da diese Schwingungen angeschlossene Anlagenteile und dabei vor allem die Transformatoren Tr gefährden, ist erfindungsgemäss elektrisch parallel zu jedem der Stromwandler $L_S$ ein Parallelwiderstand R vorgesehen. Mit dem bei hohen Frequenzen eine beachtliche Längsinduktivität in der Grössenordnung von 10 bis 50 µH aufweisenden Stromwandler $L_S$ zusammen, stellt jeder der Parallelwiderstände R eine optimale Bedämpfung der Eigenfrequenz $f_E$ der Schaltanlage dar, wenn $R = 2 \pi f_E L_S$ gewählt ist.

Da sich die Eigenfrequenz der Anlage mit dem Schaltzustand je nach der Anzahl und der Länge der abgehenden Leitungen ändert, ist es häufig zweckmässiger, die Parallelwiderstände R auf die kritische Eigenfrequenz des jeweils angeschlossenen Transformators Tr abzustimmen. Darüber hinaus haben Versuche gezeigt, dass es vorteilhaft ist, die Stromwandler $L_S$ nicht nur in den Abzweigen 3, 5 und 6 mit Transformatoren, sondern in allen Abzweigen die wesentliche Anteile des Hochfrequenzstroms führen, also beim dargestellten Ausführungsbeispiel auch im Abzweig 4, zu beschalten.

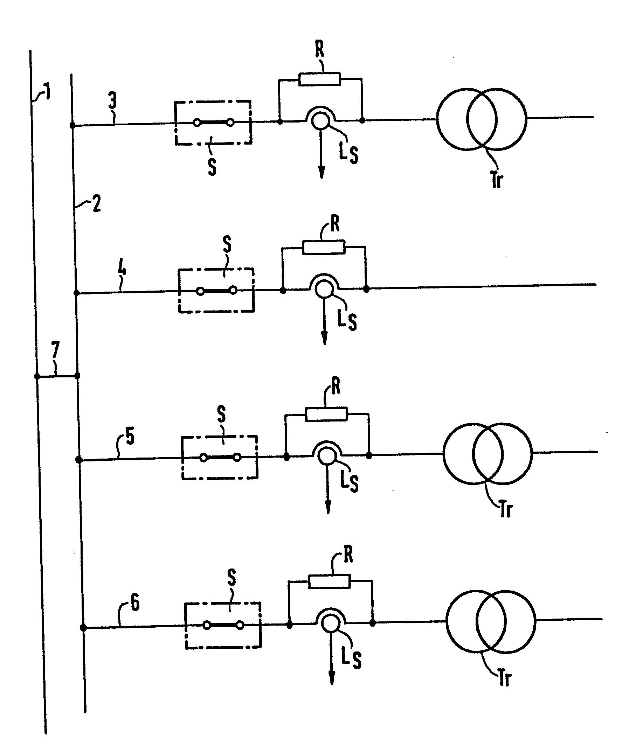

## Patentansprüche

1. Schaltungsanordnung zur Bedämpfung von Ein- und Ausschaltschwingungen in einer Schaltanlage eines Elektrizitätsversorgungsnetzes mit Transformatoren (Tr), Stromwandlern ($L_S$) und Schaltern (S) an und in Leitungsabzweigen (3, 4, 5 und 6), dadurch gekennzeichnet, dass parallel zu jedem der in einem Transformatorabzweig (3, 5 und 6) liegenden, gegen hochfrequente Schwingungen als Längsinduktivität ($L_S$) wirkenden Stromwandler ($L_S$) der Schaltanlage ein Parallelwiderstand R der Grösse.

$$R = 2 \pi f_E L_S$$

geschaltet ist, wobei $f_E$ die Eigenfrequenz der Schaltanlage ist.

2. Schaltungsanordnung nach Anspruch 1, dadurch gekennzeichnet, dass hinsichtlich der Eigenfrequenz ($f_E$) zur Bestimmung der Grösse des Parallelwiderstandes (R) lediglich der dominierende Einfluss der Eigenfrequenz des jeweils mit dem Dämpfungsglied in Reihe liegenden Transformators (Tr) berücksichtigt ist.

3. Schaltungsanordnung nach Anspruch 1 und 2, dadurch gekennzeichnet, dass nicht nur den Stromwandlern ($L_S$) in Abzweigen (3, 5 und 6) zu Transformatoren, sondern auch in anderen Abzweigen (4), soweit sie Anteile eines Hochfrequenzstromes führen, liegenden Stromwandlern ($L_S$) ein Parallelwiderstand (R) parallel geschaltet ist.

## Claims

1. A circuit arrangement for the damping of oscillations produced in a switch gear installation of an electricity supply network, at switch-on or switch-off, including transformers (Tr), current converters ($L_S$) and switches (S) on and in line branches (3, 4, 5 und 6), characterised in that each of the current converters ($L_S$) arranged in a transmission branch (3, 5 and 6) to serve as a longitudinal inductance ($L_S$) for high-frequency oscillations is connected with a parallel resistor (R) whose value is

$$R = 2 \pi f_E L_S$$

where $f_E$ is the natural frequency of the switch gear installation.

2. A circuit arrangement as claimed in claim 1, characterised in that as regards the natural frequency ($f_E$), only the dominating influence of the natural frequency of the transformer (Tr), in each case connected in series to the damping element, is taken into account in determining the value of the parallel resistor (R).

3. A circuit arrangement as claimed in claims 1 and 2, characterised in that not only is a parallel resistor (R) connected to the current converters ($L_S$) in transmission branches (3, 5 and 6), but also to current converters ($L_S$) located in other branches (4) that conduct high-frequency current components.

## Revendications

1. Montage pour amortir des oscillations intervenant lors de la mise en circuit et de la mise hors circuit dans une installation de commutation d'un réseau d'alimentation électrique, comportant des transformateurs (Tr), des transformateurs d'intensité ($L_S$) et des interrupteurs (S) raccordés à et montés dans des dérivations de ligne (3, 4, 5 et 6), caractérisé par le fait qu'en parallèle avec chaque transformateur d'intensité ($L_S$) de l'installation de commutation, situé dans une dérivation (3, 5 et 6) d'un transformateur et agissant en tant qu'inductance longitudinale ($L_S$) vis-à-vis d'oscillations à haute fréquence, se trouve branchée une résistance en parallèle (R), ayant pour valeur

$$R = 2 \pi f_E L_S$$

$f_E$ désignant la fréquence propre de l'installation de commutation.

2. Montage suivant la revendication 1, caractérisé par le fait qu'en ce qui concerne la fréquence propre ($f_E$), on prend en compte, pour la détermination de la valeur de la résistance (R) branchée en parallèle, uniquement l'influence dominante de la fréquence propre du transformateur (Tr) branché respectivement en série avec le circuit d'amortissement.

3. Montage suivant les revendications 1 et 2, caractérisé par le fait qu'une résistance en parallèle (R) est branchée en parallèle non seulement avec les transformateurs d'intensité ($L_S$) présents dans des dérivations (3, 5 et 6) aboutissant à des transformateurs, mais également avec des transformateurs d'intensité ($L_S$) situés dans d'autres dérivations (4), dans la mesure où elles véhiculent des composantes d'un courant à haute fréquence.

0 162 965

5